# EUROPEAN PATENT SPECIFICATION

(11) **EP 1 308 005 B1**
(45) Date of publication and mention of the grant of the patent: **22.08.2007**
(21) Application number: 01950138.6
(22) Date of filing: 05.07.2001
(51) Int. Cl.: H04L 12/56, H04L 12/26

(54) **METHOD AND ARRANGEMENT FOR PACKET MANAGEMENT IN A ROUTER**
VERFAHREN UND ANORDNUNG ZUR PAKETVERWALTUNG IN EINEM ROUTER
PROCEDE ET SYSTEME DE GESTION DE PAQUETS DANS UN ROUTEUR

(30) Priority: 25.07.2000 SE 0002758
(43) Date of publication of application: 07.05.2003
(73) Proprietor: Telia AB (publ), 123 86 Farsta (SE)
(72) Inventor: KRAMPELL, Magnus, S-226 55 Lund (SE)
(74) Representative: Hopfgarten, Nils
(86) International application number: PCT/SE2001/001557
(87) International publication number: WO 2002/009369

(56) References cited:
- EP-A2- 0 854 608
- WO-A1-00/75236
- WO-A2-99/35577
- US-A- 6 085 252
- LABRADOR MIGUEL A. ET AL.: 'Packet dropping policies for ATM and IP networks' IEEE COMMUNICATIONS SURVEYS, [Online] vol. 2, no. 3, 1999, pages 2 - 14, XP002948113 Retrieved from the Internet: <URL:http://www.comsoc.org/pubs/serveys> [retrieved on 2001-03-28]
- WALTON S. ET AL.: 'High-speed data paths in host based routers' COMPUTER vol. 31, no. 11, November 1998, pages 46 - 52, XP002948114

## Description

### Field of invention

The present invention relates to a method and an arrangement for packet management in a router and more particularly for control of dropped packets and storing information about dropped packets for management and measurement purposes. By storing information such as time, packet size and other useful information about the dropped packets, the invention enables loss measurement, error detection and other verification procedures.

### State of the art

An Internet Protocol (IP) router typically receives IP packets on an incoming interface; checks the header of the packet for address (and possibly other) information; consults its routing table concerning where to send the packet; and finally sends the packet on an outgoing interface.

Since packets that are coming in simultaneously on several incoming interfaces may need to be sent out on the same outgoing interface, there is a queue for packets waiting to be sent. When queues are full, packets are "dropped". This means that they are deleted and not placed in the queue. A counter for "dropped packets" in the router is incremented each time a packet is dropped. This is a simplification of the actual process, which includes metering, shaping etc before the actual "dropping". However, for the sake of describing the present invention, it is not important how the packet to be dropped was selected.

### Problem

IP networks are generally resilient to dropped packets. TCP (Transmission Control Protocol) will for example recognise that a packet has been dropped (through a timeout procedure) and re-transmit the packet. UDP (User Datagram Protocol) packets are normally not considered worth re-transmitting, and applications can sometimes do without them. However, it does affect the performance or other quality-related parameters, see below.

An increasingly popular service is to guarantee a certain level of Quality of Service (QoS). As part of such a guarantee, the amount of loss may need to be kept under a threshold, for example. Traffic may belong to different Quality Classes, each class having its associated loss threshold. If the routers only keep a sum of the packets dropped, it is not possible to see if the threshold for a certain class has been passed and thus to verify that the QoS level delivered was in parity with the guaranteed level.

If the router uses WRED (Weighted Random Early Detect) or similar schemes, the number of packets dropped for a certain class may be estimated as a part of the total number of dropped packets, according to the probability rate used by the algorithm. However, the figure will be an estimate at best. There is no way to find the exact number.

### Solution

The invention makes it possible to identify all dropped packets. It is proposed to add the following functionality to the "dropper", i.e. that part of the router software, which is invoked when a packet is to be dropped:
When the router control software has decided that a packet should be dropped, the following actions should be carried out instead of just deleting the packet and incrementing a counter: copy and store relevant information about the packet to be dropped in a specific memory before the packet is dropped. The stored information is used later for various purposes. The invention provides information upon which statistical and other operations may be performed and enables new functionalities such as true loss measurement and error detection.

### Summary of the invention

The present invention provides a method for managing packets in a router comprising input ports for receiving packets, queues for storing packets before the packets are sent to output ports, routing logic for determining in which queue a packet is to be stored, and dropping logic for determining if a packet is to be dropped.

According to the invention the method comprises the steps of, when a packet is to be dropped, copying information about the dropped packet, storing the information in an information memory, and removing the packet from its queue.

Preferably, the information includes current time, original packet size, router state, queue identification, and/or the reason why the packet was dropped.

The invention also provides an arrangement for carrying out the method. The invention is defined in the independent claims 1 and 13 below, while preferred embodiments are set forth in the dependent claims.

### Brief description of the drawings

The invention will be described in detail below with reference to the accompanying drawings in which:

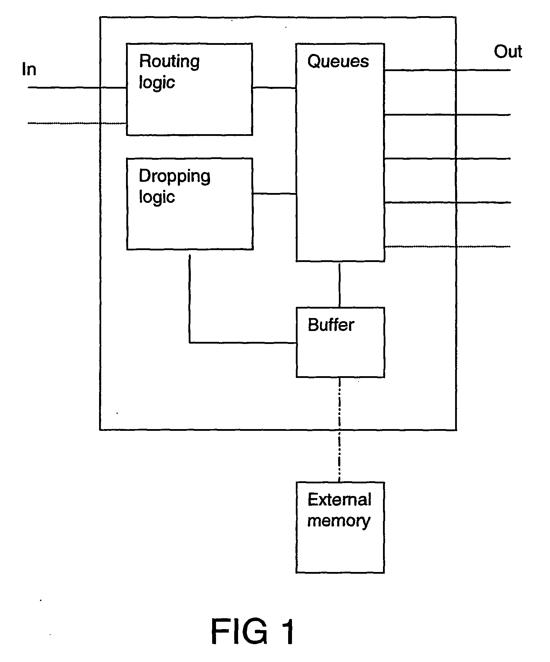

fig. 1 is a schematic representation of a router according to the invention.

### Detailed description of preferred embodiments

A block diagram of a router in accordance with the present invention is shown in fig. 1. Generally, the router is used to switch packets in a network. Packets are received at an input interface or several input ports. Routing logic checks the packet to determine the destination and sends the packet to the appropriate output port. Queues are associated with the output ports for temporarily storing the packets. A dropping logic checks the queues to see if there is a risk for overflow. If this is the case, packets are selected for dropping, i.e. the packet is removed from the queue. As is conventional, the number of packets may be counted by incrementing a special counter.

The present invention provides an improvement to the packet management by storing more in detail information about packets to be dropped. Instead of just removing the packet from the queue and incrementing the counter the following actions are carried out.
1. Copy the header part of the packet, including the header for the transport layer i.e. UTC/UDP, to a specific memory or buffer for "information on dropped packets".
2. Store current time, original packet size and other useful information about the dropped packet (or router state) in the buffer. Other information, e.g. which queue it was dropped from and the reason it was dropped, could also be stored. Which information to store is preferably configurable through a management interface on the router.
3. Return to normal operation, i.e. remove packet from queue and increment counter for dropped packets.

The buffer for "information on dropped packets" must be written to an external memory, e.g. a disk, at regular intervals, or at least often enough so that this buffer will never be full, i.e. to avoid overflow. The stored information should be accessible e.g. through SNMP (Simple Network Management Protocol) for management systems. The corresponding MIB (Management Information Base) parameters need to be standardised. By using filters, part of the information can be retrieved, e.g. in order to find the effects on a specific customer or the number of packets dropped for a specific quality class.

The following innovative functions are being made possible by means of the present invention.
1. Loss measurement a. Loss measurement according to the IETF (Internet Engineering Task Force) IPPM, i.e. "Loss Period", which measures frequency and burstiness of loss, and "Loss Distance", which measures the spacing between loss periods, can be done by statistical operations on the collected data on dropped packets. Data needs to be collected for a time corresponding to the level of confidence that is required in the measurement.
   The method does not measure loss that is defined as packets arriving at the destination delayed more then the jitter buffer can handle. These packets are ignored by the application and infer the same performance and quality degradations as losses in a router on the data path.
2. Loss measurement b. Data corresponding to lost packets are stored at most until at time period relevant to the guarantee in the corresponding SLA (Service Level Agreement) has passed. If, for example, the loss is guaranteed to stay below *x* % in a 3 months period for Class Y, information on lost packets needs to be collected for 3 months. By comparing data about dropped packets with information about data rate (number of packets per second) sent, (this data needs to be measured by other means), it can be verified if the guarantee was honoured or not. However, if the loss rate, being continuously calculated following the agreed probability function (e.g. a gauss function) exceeds the agreed value, a breach of contract needs to be noted and measurements can start afresh.
3. Error Detection: Information stored about why and where a packet (or several packets) was dropped can be used to identify errors in the router software or hardware.
4. Traffic Engineering: Information about which queues that are being filled (and consequently drop packets) can be used for traffic engineering purposes.
5. The data on the dropped packets can also be used when verifying the correctness of e.g. WRED algorithm implementations in the router. The current way to do this is to compare the data packets transmitted with the data packets received through the router. In order to be statistically valid, the amount of data needs to be large, so the method is slow and requires huge amounts of storage capacity. By instead looking at the data stored from dropped packets, one could verify that the relationship between dropped packets from different levels of priority follows the theoretical model. The amount of data that needs to be processed is then much less.
6. Measurement on performance degradation in TCP-based applications. As was mentioned in the problem statement section above, TCP can cover up for lost packets by re-transmitting them. This will however affect throughput, both by the need to send a packet twice, but also since TCP lowers its transmission speed when packets are lost. If it is known which packets are lost, the effects on the corresponding data stream can be calculated.
7. Acknowledgement of quality degradation in UDP-based applications. As was also mentioned above, applications using UDP are often resilient to the loss of such packets. However, if the data stream is an audio or video stream, the perceived quality will be affected by the loss. Without knowing the application, the amount of impairment is almost impossible to calculate, but the fact that impairment was effected can be acknowledged.

The proposed changes in the router adds to the load of the processor and requires memory space. However:
- Because the size of the "information on dropped packets" is much smaller than the packets they contain information about, there is a limited need for memory space for the buffer. An IP header plus TCP/UDP header is around 35 - 40 bytes compared to a complete FTP (File Transfer Protocol) packet, which may be 1500 to 4000 bytes. The total amount of data that is stored for each packet may be less than 100 bytes.
- The extra load on the router processor will be minimal. The copy operation is similar to copy operations from one queue to another, only with less data.
- The router may be configured to perform the above actions only for packets of a certain class, e.g. packets belonging to class "Best Effort" are not saved, but only counted, while packets belonging to other classes are saved. This would save space and processor power in the router.
- An off-line activity can be to "compress" the stored data by removing duplicate information, e.g. replacing them with a number of duplicates stored with the first occurrence.

A person skilled in the art will realise that the described embodiments of the invention may varied without departing from the scope of the following claims.

## Claims

1. A method for managing packets in a router comprising input ports for receiving packets, queues for storing packets before the packets are sent to output ports, routing logic for determining in which queue a packet is to be stored, and dropping logic for determining if a packet is to be dropped, including the steps:
- when a packet is to be dropped, copying information about the dropped packet;
- storing the information in an information memory; and
- removing the packet from its queue,
**characterised in that** the step to copy information includes the steps to:
- copy current time;
- copy original packet size;
- copy router state;
- copy queue identification; and/or
- copy the reason why the packet was dropped.

2. A method according to claim 1, **characterised in that** a header part of the packet is copied.

3. A method according to claim 1 or 2, **characterised in that** the contents of the information memory is written to an external memory in order to avoid overflow.

4. A method according to any one of the preceding claims,
**characterised in that** statistical operations are performed on the collected information to obtain effects of dropped packets.

5. A method according to claim 4, **characterised in that** operations are performed to make loss measurements.

6. A method according to claim 5, **characterised in that** information about dropped packets is stored at least during a time period relevant to a guaranteed quality in order to verify if the guarantee was honoured.

7. A method according to any one claims 1 to 3, **characterised in that** information about dropped packets is used to identify errors in the router.

8. A method according to any one claims 1 to 3, **characterised in that** information about dropped packets is used for traffic engineering purposes.

9. A method according to any one claims 1 to 3, **characterised in that** information about dropped packets is used for measurement of degradation in TCP-based applications.

10. A method according to any one claims 1 to 3, **characterised in that** information about dropped packets is used for acknowledgement of quality degradation in UDP-based applications.

11. A method according to any one of the preceding claims,
**characterised in that** information about dropped packets is stored only for packets of specified classes.

12. A method according to any one of the preceding claims,
**characterised in that** the information about dropped packets is compressed to save space in the respective memory.

13. An arrangement for managing packets in a router comprising input ports for receiving packets, queues for storing packets before the packets are sent to output ports, routing logic for determining in which queue a packet is to be stored, and dropping logic for determining if a packet is to be dropped, and including an information memory for, when a packet is to be dropped, storing information about the dropped packet, **characterised in that** the information memory is arranged to include information including current time, original packet size, router state, queue identification, and/or the reason why the packet was dropped.

14. An arrangement according to claim 13, **characterised by** an external memory to which the contents of the information memory is written in order to avoid overflow.

15. An arrangement according to any one of claims 13 to 14,
**characterised by** means for performing statistical operations on the collected information to obtain effects of dropped packets.

16. An arrangement according to any one of claims 13 to 15,
**characterised in that** operations are performed to make loss measurements.

17. An arrangement according to claim 16, **characterised in that** information about dropped packets is stored at least during a time period relevant to a guaranteed quality in order to verify if the guarantee was honoured.

18. An arrangement according to any one of claims 13 to 15,
**characterised by** means for using information about dropped packets to identify errors in the router.

19. An arrangement according to any one of claims 13 to 15,
**characterised by** means for using information about dropped packets for traffic engineering purposes.

20. An arrangement according to any one of claims 13 to 15,
**characterised by** means for using information about dropped packets for measurement of degradation in TCP-based applications.

21. An arrangement according to any one of claims 13 to 15,
**characterised by** means for using information about dropped packets for acknowledgement of quality degradation in UDP-based applications.

22. An arrangement according to any one of claims 13 to 20, **characterised by** means for compressing the information about dropped packets to save space in the respective memory.

## Patentansprüche

1. Verfahren zum Verwalten von Paketen in einem Router (Nachrichtenweiterleiteinrichtung), der Eingangsanschlüsse zum Empfangen von Paketen, Warteschlagen zum Speichern von Paketen, bevor die Pakete zu Ausgangsanschlüssen gesendet werden, Routinglogik (Leitweglenkungslogik) zum Bestimmen, in welcher Warteschlange ein Paket gespeichert werden soll, und Logik zum Fallenlassen aufweist, zu bestimmen, ob ein Paket fallengelassen werden soll, das die Schritte einschließt:
- wenn ein Paket fallengelassen werden soll, Information über das fallengelassene Paket zu kopieren;
- die Information in einem Informationsspeicher zu speichern; und
- das Paket aus seiner Warteschlange zu entfernen,
**dadurch gekennzeichnet, dass** der Schritt, Information zu kopieren, die Schritte einschließt:
- die momentane Zeit zu kopieren;
- die ursprüngliche Paketgröße zu kopieren;
- den Routerzustand zu kopieren;
- die Warteschlangenidentifizierung zu kopieren; und/oder
- den Grund zu kopieren, warum das Paket fallengelassen wurde

2. Verfahren, nach Anspruch 1, **dadurch gekennzeichnet, dass** ein Kopfsatzteil des Pakets kopiert wird.

3. Verfahren, nach Anspruch 1 oder 2, **dadurch gekennzeichnet, dass** der Inhalt des Informationsspeichers in einen extarnen Speicher geschrieben wird, um Überlauf zu vermeiden.

4. Verfahren nach einem der vorangehenden Ansprüche, **dadurch gekennzeichnet, dass** statistische Operationen an der gesammelten Information durchgeführt werden, um Wirkungen fallengelassener Pakete zu erhalten.

5. Verfahren nach Anspruch 4, **dadurch gekennzeichnet, dass** Operationen durchgeführt werden, um Verlustmessungen zu machen.

6. Verfahren nach Anspruch 5, **dadurch gekennzeichnet, dass** Information über fallen gelassene Pakete wenigstens während einer Zeitperiode gespeichert wird, die für eine garantierte Qualität relevant ist, um zu prüfen, ob die Garantie honoriert worden ist.

7. Verfahren nach einem der Ansprüche 1 bis 3, **dadurch gekennzeichnet, dass** Information über fallen gelassene Pakete verwendet werden, um Fehler im Router zu identifizieren.

8. Verfahren nach einem der Ansprüche 1 bis 3, **dadurch gekennzeichnet, dass** Information über fallen gelassene Pakete für verkehrstechnische Zwecke benutzt wird.

9. Verfahren nach einem der Ansprüche 1 bis 3, **dadurch gekennzeichnet, dass** Information über fallen, gelassene Pakete für Messung von Verschlechterung von auf TCP beruhenden Anwendungen verwendet wird.

10. Verfahren nach einem der Ansprüche 1 bis 3, **dadurch gekennzeichnet, dass** Information über fallen gelassene Pakete für Bestätigung der Qualitätsverschlechterung in auf UDP beruhenden Anwendungen verwendet wird.

11. Verfahren nach einem der vorangehenden Ansprüche, **dadurch gekennzeichnet, dass** Information über fallen gelassene Pakete nur für Pakete für angegebene Klassen gespeichert wird.

12. Verfahren nach einem der vorangehenden Ansprüche, **dadurch gekennzeichnet, dass** die Information über fallengelassene Pakete komprimiert wird, um Platz im entsprechenden Speicher zu sparen.

13. Anordnung zum Verwalten von Paketen in einem Router, der Eingangsanschlüsse zum Empfang von Paketen, Warteschlangen zum Speichern von Paketen, bevor die Pakete zur Ausgangsanschlüssen gesandt werden, Routinglogik zum Bestimmen, in welcher Warteschlange ein Paket gespeichert werden soll, und Logik zum Fallenlassen zum Bestimmen aufweist, ob ein Paket fallen gelassen werden soll, und einen Informationsspeicher einschließt, um, wenn ein Paket fallen gelassen werden soll, Information über das fallen gelassene Paket zu speichern, **dadurch gekennzeichnet, dass** der Informationsspeicher dazu ausgebildet ist, Information einzuschließen, die momentane Zeit, ursprüngliche Paketgröße, Routerzustand, Warteschlangenidentifizierung und/oder den Grund einschließt, warum das Paket fallen gelassen worden ist.

14. Anordnung nach Anspruch 13, **gekennzeichnet durch** einen externen Speicher, in den der Inhalt des Informationsspeichers eingeschrieben wird, um Überlauf zu vermeiden.

15. Anordnung nach einem der Ansprüche 13 bis 14, **gekennzeichnet durch** Mittel zum Durchführen von statistischen Operationen an der gesammelten Information, um die Wirkungen fallen gelassener Pakete zu erhalten.

16. Anordnung nach einem der Ansprüche 13 bis 15, **dadurch gekennzeichnet, dass** Operationen durchgeführt werden, um Verlustmessungen durchzuführen.

17. Anordnung nach Anspruch 16, **dadurch gekennzeichnet, dass** Information über fallen gelassene Pakete wenigstens während einer Zeitperiode gespeichert wird, die für eine garantierte Qualität relevant ist, um zu prüfen, ob die Garantie honoriert wurde.

18. Anordnung nach einem der Ansprüche 13 bis 15, **gekennzeichnet durch** Mittel zum Benutzen von Informationen über fallen gelassene Pakete, um Fehler im Router zu identifizieren.

19. Anordnung nach einem der Ansprüche 13 bis 15, **gekennzeichnet durch** Mittel zum Benutzen von Information über fallengelassen Pakete für verkehrstechnische Zwecke.

20. Anordnung nach einem der Ansprüche 13 bis 15, **gekennzeichnet durch** Mittel zum Benutzen von Information über fallen gelassene Pakete für Messung von Verschlechterung in auf TCP beruhenden Anwendungen.

21. Anordnung nach einem der Ansprüche 13 bis 15, **gekennzeichnet durch** Mittel zum Benutzen von Informationen über fallen gelassene Pakete für Bestätigung von Qualitätsverschlechterung in auf UDP beruhenden Anwendungen.

22. Anordnung nach einem der Ansprüche 13 bis 20, **gekennzeichnet durch** Mittel zum Komprimieren der Information über fallen gelassen Pakete, um Platz im entsprechenden Speicher zu sparen.

## Revendications

1. Procédé pour gérer des paquets dans un routeur comprenant des ports d'entrée pour recevoir des paquets, des files d'attente pour stocker des paquets avant que les paquets ne soient envoyés à des ports de sortie, une logique d'acheminement pour déterminer dans quelle file d'attente un paquet doit être stocké, et une logique d'abandon pour déterminer si un paquet doit être abandonné, comprenant les étapes consistant à :
lorsqu'un paquet doit être abandonnée copier des informations concernant le paquet abandonné ;
- mémoriser les informations dans une mémoire d'informations ; et
- retirer le paquet de sa file d'attente,
**caractérisé en ce que** l'étape consistant à copier des informations comprend les étapes consistant à :
- copier une heure actuelle ;
- copier une taille de paquet d'origine;
- copier un état de routeur ;
- copier une identification de file d'attente; et/ou
- copier la raison pour laquelle le paquet a été abandonné.

2. Procédé selon la revendication 1, **caractérisé en ce qu'**une partie d'en-tête du paquet est copiée.

3. Procédé selon la revendication 1 ou 2, **caractérisé en ce que** le contenu de la mémoire d'informations est écrit dans une mémoire externe afin d'éviter un débordement.

4. Procédé selon l'une quelconque des revendications précédentes, **caractérisé en ce que** des opérations statistiques sont effectuées sur les informations collectées afin d'obtenir des effets de paquets abandonnés.

5. Procédé selon la revendication 4, **caractérisé en ce que** des opérations sont effectuées pour effectuer des mesures de perte.

6. Procédé selon la revendication 5, **caractérisé en ce que** des informations concernant des paquets abandonnés sont mémorisées au moins pendant une période de temps en rapport avec une qualité garantie afin de vérifier si la garantie a été respectée.

7. Procédé selon l'une quelconque des revendications 1 à 3, **caractérisé en ce que** des informations concernant des paquets abandonnés sont utilisées pour identifier des erreurs dans le routeur.

8. Procédé selon l'une quelconque des revendications 1 à 3, **caractérisé en ce que** des informations concernant des paquets abandonnés sont utilisées à des fins d'ingénierie de trafic.

9. Procédé selon l'une quelconque des revendications 1 à 3, **caractérisé en ce que** des informations concernant des paquets abandonnés sont utilisées pour la mesure de la dégradation d'applications basées sur TCP.

10. Procédé selon l'une quelconque des revendications 1 à 3, **caractérisé en ce que** des informations concernant des paquets abandonnés sont utilisées pour la reconnaissance de la dégradation de qualité dans des applications basées sur UDP.

11. Procédé selon l'une quelconque des revendications précédentes, **caractérisé en ce que** des informations concernant des paquets abandonnés sont mémorisées uniquement pour des paquets de classes spécifiées.

12. Procédé selon l'une quelconque des revendications précédentes, **caractérisé en ce que** des informations concernant des paquets abandonnés sont compressées pour économiser l'espace dans la mémoire respective.

13. Agencement pour gérer des paquets dans un routeur comprenant des ports d'entrée pour recevoir des paquets, des files d'attente pour stocker des paquets avant que les paquets ne soient envoyés à des ports de sortie, une logique d'acheminement pour déterminer dans quelle file d'attente un paquet doit être stocké, et une logique d'abandon pour déterminer si un paquet doit être abandonné, et comprenant une mémoire d'informations pour, lorsqu'un paquet doit être abandonné, mémoriser des informations concernant le paquet abandonné, **caractérisé en ce que** la mémoire d'informations est agencée pour comprendre des informations comprenant une heure actuelle, une taille de paquet d' origine, un état de routeur, une identification de file d'attente, et/ou la raison pour laquelle le paquet a été abandonné.

14. Agencement selon la revendication 13, **caractérisé par** une mémoire externe dans laquelle le contenu de la mémoire d'informations est écrit afin d'éviter un débordement.

15. Agencement selon l'une quelconque des revendications 13 à 14, **caractérisé par** des moyens pour effectuer des opérations statistiques sur les informations collectées afin d'obtenir des effets de paquets abandonnés.

16. Agencement selon l'une quelconque des revendications 13 à 15, **caractérisé en ce que** des opérations sont effectuées pour effectuer des mesures de perte.

17. Agencement selon la revendication 16, **caractérisé en ce que** des informations concernant des paquets abandonnés sont mémorisées au moins pendant une période de temps en rapport avec une qualité garantie afin de vérifier si la garantie a été respectée.

18. Agencement selon l'une quelconque des revendications 13 à 15, **caractérisé par** des moyens pour utiliser des informations concernant des paquets abandonnés pour identifier des erreurs dans le routeur.

19. Agencement selon l'une quelconque des revendications 13 à 15, **caractérisé par** des moyens pour utiliser des informations concernant des paquets abandonnés à des fins de trafic.

20. Agencement selon l'une quelconque des revendications 13 à 15, **caractérisé par** des moyens pour utiliser des informations concernant des paquets abandonnés pour la mesure de la dégradation d'applications basées sur TCP.

21. Agencement selon l'une quelconque des revendications 13 à 15, **caractérisé par** des moyens pour utiliser des informations concernant des paquets abandonnés pour la reconnaissance de la dégradation de qualité dans des applications basées sur UDP.

22. Agencement selon l'une quelconque des revendications 13 à 20, **caractérisé par** des moyens pour compresser les informations concernant des paquets abandonnés pour économiser l'espace dans la mémoire respective.
